(19) Europäisches Patentamt
European Patent Office
Office européen des brevets

(11) **EP 4 296 032 B1**

(12) **EUROPEAN PATENT SPECIFICATION**

(45) Date of publication and mention
of the grant of the patent:
**22.10.2025  Bulletin 2025/43**

(21) Application number: **23181307.2**

(22) Date of filing: **23.06.2023**

(51) International Patent Classification (IPC):
*B29C 45/76* (2006.01)       *G06F 30/23* (2020.01)
*G06F 30/28* (2020.01)       *G06F 113/08* (2020.01)

(52) Cooperative Patent Classification (CPC):
**B29C 45/7693; G06F 30/28;** G06F 2113/08

(54) **MODELLING FLUID FLOW**

MODELLIERUNG EINES FLUIDSTROMS

MODÉLISATION D'ÉCOULEMENT DE FLUIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022  US 202217849483**

(43) Date of publication of application:
**27.12.2023  Bulletin 2023/52**

(73) Proprietor: **Autodesk, Inc.**
**San Francisco, CA 94105 (US)**

(72) Inventors:
• **COSTA, Franco**
**San Francisco, 94105 (US)**
• **HAN, Sejin**
**San Francisco, 94105 (US)**

(74) Representative: **Fish & Richardson P.C.**
**Highlight Business Towers**
**Mies-van-der-Rohe-Straße 8**
**80807 München (DE)**

(56) References cited:
**US-A1- 2022 004 682**

• **JIKAI LIU ET AL: "A novel CACD/CAD/CAE integrated design framework for fiber-reinforced plastic parts", ADVANCES IN ENGINEERING SOFTWARE, vol. 87, 1 September 2015 (2015-09-01), GB, pages 13 - 29, XP055654326, ISSN: 0965-9978, DOI: 10.1016/ j.advengsoft.2015.04.013**
• **EDITED BY ET AL: "Moldflow Design Guide A Resource for Plastics Engineers First Edition", 31 December 2006 (2006-12-31), XP055132560, Retrieved from the Internet <URL:http:// marciaswan.weebly.com/uploads/1/3/5/8/ 13585698/mfdg_low-res_proof_part1.pdf> [retrieved on 20140731]**
• **"MOLDFLOW DESIGN PRINCIPLES", MOLDFLOW DESIGN PRINCIPLES, 10 April 1999 (1999-04-10), pages A, I - VI, 1, 3, XP000783756**

## Description

### TECHNICAL FIELD

This application relates to modelling fluid flow, for example, for injection molding.

### BACKGROUND

In various industries, injection molds are used to manufacture parts, where a material (e.g., plastic resin, such as thermoplastic, thermosetting or elastomer material, metal, etc.) is prepared in a liquid form (e.g. heated and melted), and then piped or injected under pressure into the voids of an empty mold (also referred to as a die) and then cools or undergoes a chemical reaction so as to permanently harden in the shape of the hollow mold cavity. The cavity of the mold has a shape corresponding to the part to be manufactured, and other components often include a mold core that fits into the cavity and a clamp that attaches to the mold to maintain an appropriate amount of pressure on the liquid in the mold cavity as the liquid is solidified.

The solidified and set material is removed from the mold, forming the near finished product, piece, or part in the shape of the mold. Injection molding can be an efficient method of production in that it typically allows manufacturers to reuse one or more dies and reproduce, with precision, the products formed in the die. Typically, the initial design and manufacture of the mold is quite costly. Much is invested to design and perfect a mold that will be reused, in some instances, millions of times over the course of its life. Consequently, injection molding is often characterized by high efficiencies of scale, the return on investment for a particular die dependent on the durability and lasting precision of the die. As a result, typical injection mold cavity design is at the same time a critically important, but difficult and costly process.

Thousands of polymer materials exist capable of being used in injection molding applications. In some instances, the material that is to be used in an injection molding application can even influence the design of a given mold cavity and vice versa. For instance, some high viscosity materials, in their molten form, may perform poorly in a mold cavity machined with narrow gates, runners, and cavity voids. Additionally, the geometry of the mold cavity can also influence the physical properties of plastic parts manufactured using the mold. Indeed, two parts having identical dimensions and made from the same thermoplastic material but molded under different conditions, with different injection locations, for instance, can possess different stress and shrinkage levels.

US 2022/004682 describes computer-aided design of physical structures using generative design processes.

J. Liu et al, Advances in Engineering Software, 87, 13-29 (2015) describes a framework for design, modeling, and optimization of fiber-reinforced plastic parts.

Moldflow Design Guide - A Resource for Plastics Engineers (2006) describes different stages of the design of parts and molds and provides background on the injection molding process.

Moldflow Design Principles describes principles used in the design of injection molds.

### SUMMARY

This disclosure describes technologies relating to modelling fluid flow.

The invention is defined in the appended claims.

Particular implementations of the subject matter described in this disclosure can be implemented so as to realize one or more of the following advantages. The subject matter described herein allows for coarser meshes to be used during numerical simulations, reducing the time to perform numerical simulations. Such a mesh includes fewer discrete points used for iterative calculations and thus uses less memory of a data processing apparatus performing the calculations when compared to simulations using other methods. The subject matter described herein increases the speed of design and manufacturing of tooling in part due to the reduced computing time. The subject matter described herein allows for reduced CAD model preparation time because the effect of the holes can be studied without the need for explicitly including thousands of holes in CAD design. The subject matter described herein allows for simulations with different hole configurations to be more easily adjusted by changing factors related to the hole configurations rather than actually modifying the geometry/mesh each time.

### BRIEF DESCRIPTION OF THE DRAWINGS

FIG. 1 is a flowchart of an example of a method that can be used with aspects of this disclosure.
FIG. 2 is an example of a component to be modelled.
FIG. 2A is an example of a 3D model of a component having a portion with regularly patterned holes.

FIG. 2B is an example of a3D model of a component having a portion with regularly patterned holes with the holes removed.

FIG. 3A is a result of a simulation with the example 3D model of a component having a portion with regularly patterned holes.

FIG. 3B is a result of a simulation with the example 3D model of a component having a portion with regularly patterned holes with the holes removed.

FIG. 4A is a result of a simulation with the example 3D model of a component having a portion with regularly patterned holes.

FIG. 4B is a result of a simulation with the example 3D model of a component having a portion with regularly patterned holes with the holes removed.

FIG. 5 is a block diagram illustrated an example of a processing apparatus that can be used with aspects of this disclosure.

Like reference numbers and designations in the various drawings indicate like elements.

**DETAILED DESCRIPTION**

The number of pin connectors (holes) for Central Processing Unit (CPU) Sockets continues to increase year after year. The increased pin count increases the computational power needed to model injection molding of such sockets. A simplification method which can produce reasonably accurate predictions with a one or two order reductions in model preparation time and computation time would provide savings in both time and power usage. Other applications where a repeating pattern of through-holes or blind-holes occur in the injection molding flow cavity are in speaker grills, sieves and repeating prismatic patterns in light-guides, lens (e.g., car headlamp lenses) and reflectors. The repeating pattern of small prismatic indentations in a headlamp lens is an example of a high-value part with many blind holes. The prismatic pattern increases thermal contact area and flow resistance but is often not modelled in the injection molding simulation due to the very high discretization resolution which would be required. This disclosure describes a method that reduces computation time by replacing discrete holes in a model with global factors, such as a flow factor, a thermal factor, and/or a fiber orientation factor (for reinforced molded parts, such as injection molded parts, over molded parts, and/or insert molded parts.), that produce substantially similar results (for example, within 5%, within 10%, within 15%, or within 20%) to numerical analysis on a full model.

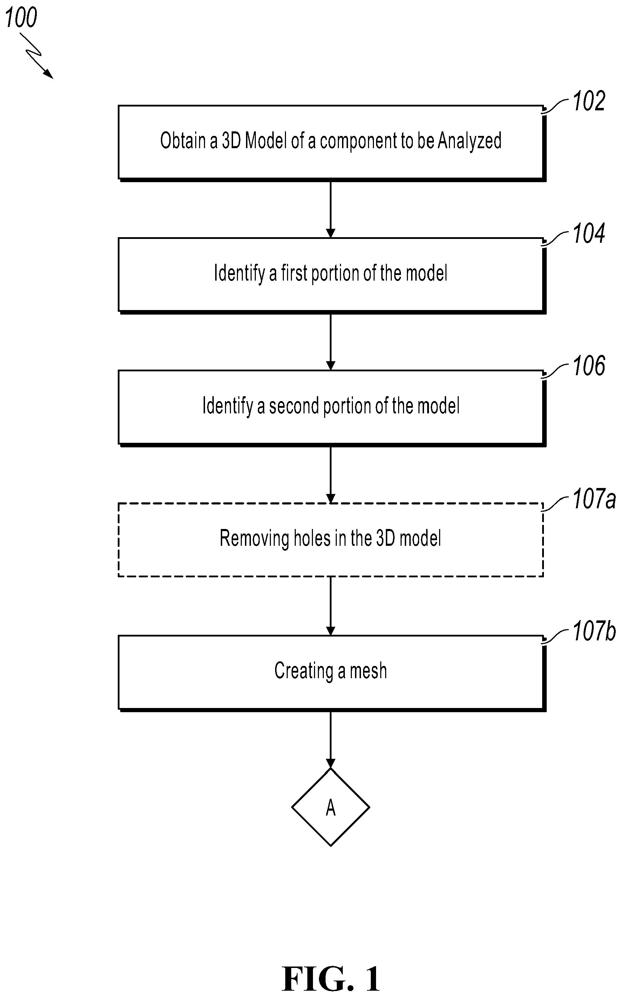

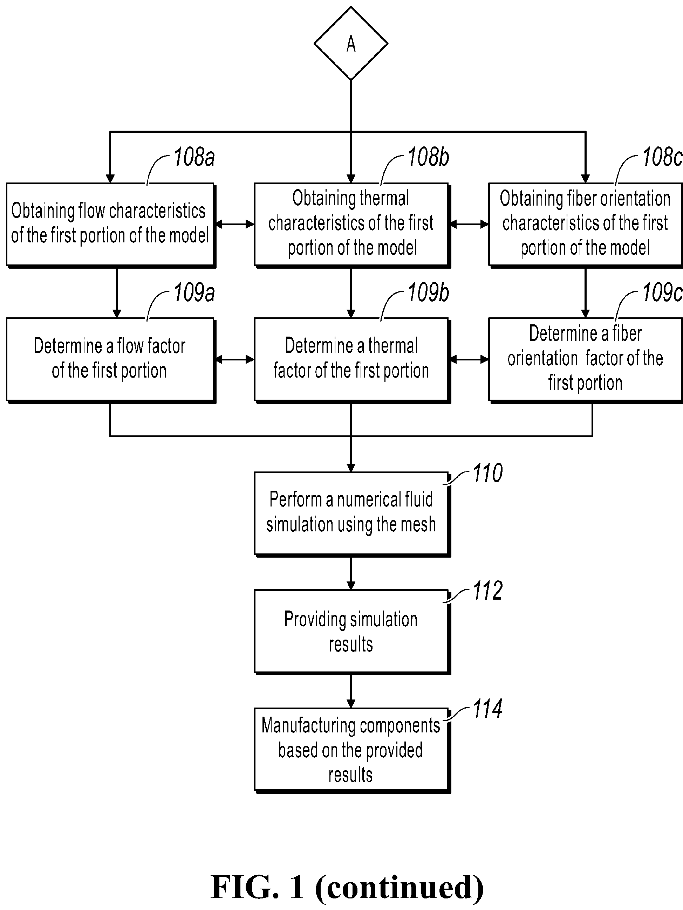

FIG. 1 is flowchart of an example method 100 that can be used with aspects of this disclosure. This disclosure will describe the operations of method 100 in the context of the remaining figures within this disclosure. The operations described are performed by a data processing apparatus. In some implementations, such an apparatus includes one or more processors and a computer-readable medium storing instructions executable by the one or more processors to perform the instructions. Alternatively or in addition, the operations described herein can be stored in a readable format to be used by a separate data processing apparatus.

At 102, a digital 3D model of a component to be analyzed is obtained. The component includes regularly patterned holes. In some instances, the regularly patterned holes include through-holes that extend an entire thickness of the component. Alternatively or in addition, in some implementations, the regularly patterned holes include blind holes that extend only partially through the thickness of the component. Alternatively or in addition, the regularly patterned holes includes one or more varied profile holes that define varied profile(s) with a varied cross-sectional shape across a depth of the hole. Such a varied profile hole can be a blind-hole or a through-hole without departing from this disclosure. Additional styles of holes can be used without departing from this disclosure.

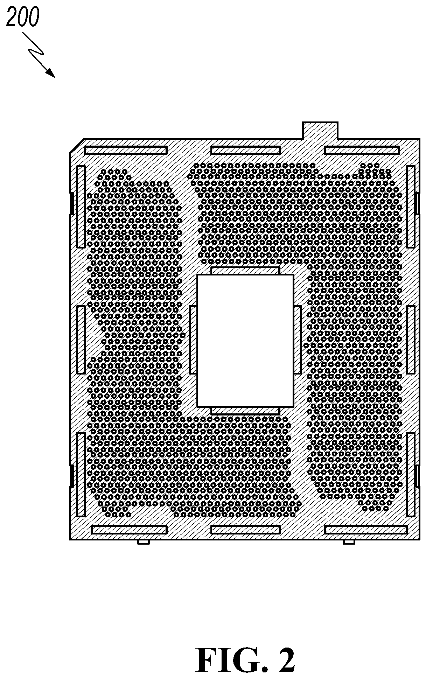

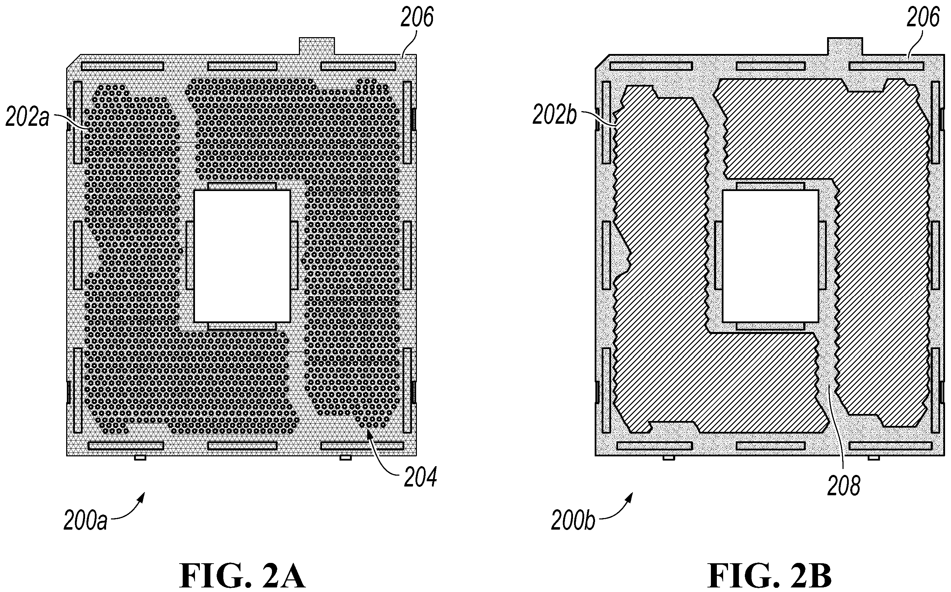

FIG. 2 is an example of a component 200 to be modelled. Example models 200a and 200b of a component 200 are illustrated in FIGS. 2A and 2B. FIG. 2A is an example 3D model 200a of the component 200 having a first portion 202a with regularly patterned holes. FIG. 2B is an example 3D model 200b of the component 200 having a first portion 202b with regularly patterned holes with the holes removed. While primarily described and illustrated within this disclosure as being of uniform size, shape, and configuration, the subject matter described herein can be used with other configurations, such as with hole-patterns with varying distances or shapes relative to one another.

At 104, a first portion (202a, 202b) of the component 200, the first portion including regularly patterned holes 204, is identified. This first portion (202a, 202b) is sometimes referred to as a grill portion, and the terms may be used interchangeably throughout this disclosure. At 106, a second portion 206 of the component 200, the second portion 206 lacking the regularly patterned holes 204, is identified. In instances where the model includes the regularly patterned holes, such as model 200a, at 107a, the holes are removed to produce model 200b. After the holes are removed, at 107b a mesh 208 is created. The created mesh 208 is coarser than a similar mesh created on a model where the regularly patterned holes 204 are left in place. In the context of this disclosure, the mesh 208 is a discretizing mesh, applied to the digital model, on which the numerical calculations are performed. For example, the mesh 208 is used to perform a numerical fluid simulation. In some implementations, the regularly patterned holes 204 are omitted from a model prior to a model being obtained. In such implementations, operation 107a can be skipped.

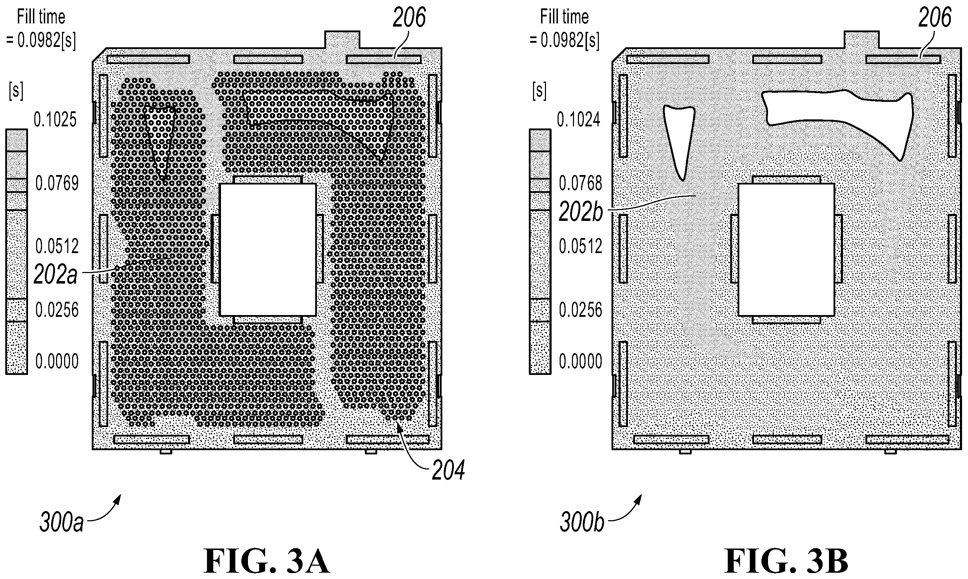

FIG. 3A is a result 300a of a simulation with the example 3D model 200a of a component having a portion with regularly patterned holes 204 being individually modeled during the numerical simulation. FIG. 3B is a result 300b of a simulation with the example 3D model 200b of the component having a portion with regularly patterned holes with the regularly patterned holes 204 removed. More specifically, FIG. 3B is showing the result of simulation using a global model/representation of the first portion to approximate the regularly patterned holes. At 108a, flow characteristics of the first portion 202b of the model are obtained, for example, by using analytical flow results or empirical flow data. At 109a, a flow factor of the first portion 202b is determined based on the analytical flow results or the empirical flow data. The flow factor indicates flow characteristics of fluid flowing through the first portion with the regularly patterned holes and, in some implementations, is used for a model with holes removed and/or not included, such as model 200a. For example, in some implementations, the flow factor is calculated with the following equation:

$$Flow\ Resistance\ Factor = Shear\ Area\ Ratio * \left(\frac{Thickness}{Dist}\right)^{(1+2n)}\quad(1)$$

where *Flow Resistance Factor* is the flow factor, where *Shear Area Ratio* is the shear area in the model without holes over the shear area with holes, where shear area is the surface area of the region where the effective shear by the flow is applied, where *Thickness* is the local part thickness, where *Dist* is the local distance between holes (edge to edge), and where *n* is the power-law index, which is a material characteristic describing the reduction of viscosity which occurs with increasing shear rate. For non-power law flow, the slope of viscosity-shear rate curve at the local temperature, shear rate and pressure condition can be used without departing from this disclosure.

The shear area ratio for a square hole can be calculated from the following equation:

$$Shear\ Area\ Ratio\ (square\ hole) = \frac{W*Depth}{(W+Dist)*(W+Dist)}\quad(2)$$

where *W* is the width of the square hole, and where *Depth* is the depth of the hole. The shear area ratio of a round hole can be calculated with the following equation:

$$Shear\ Area\ Ratio\ (round\ hole) = \frac{\pi*D*Depth}{2*(D+Dist)*(D+Dist)}\quad(3)$$

where *D* is the diameter of the round hole.

In some implementations, the concepts described herein are used to obtain flow characteristics for blind-holes and/or varied profile holes. Such flow characteristics can be determined from analytical results and/or empirical data to contribute to the determined flow factor. Regardless of the hole patterns or geometry, the flow characteristics through such a regular geometry is simplified into a flow factor that is globally analogous to the discrete calculations provided by a fine mesh used to calculate flow around individual holes. That is, performing iterative calculations with the flow factor produces results substantially similar (for example, plus or minus 5%, plus or minus 10%, plus or minus 15%, or plus or minus 20%) to iterative calculations that include the individual holes. Such examples can be seen in the illustrated simulation results (300a, 300b), which illustrate simulations performed with both methods, result 300a being with discrete holes, and result 300b using the flow factor.

Alternatively or in addition, at 108b, thermal characteristics of the first portion 202b of the model 200b are obtained using analytical thermal results and/or empirical thermal data. At 109b, a thermal factor of the first portion 202b is determined based on the analytical thermal results and/or the empirical thermal data.. The thermal factor indicates thermal characteristics of fluid flowing through the first portion 202b with the regularly patterned holes 204, and thermal properties of the component, or mold forming the component, itself. In some implementations, the thermal factor includes a growth rate of a frozen layer. For example, in implementations where plastic mold injection is being simulated, a rate of hardening of the injected liquid plastic is included.

For example, thermal properties (density and heat capacity) of the molding material are modified based on the part volume fraction and shape factor values to account for the effect of grill portion 202b in the temperature solution. In some implementations, the heat capacity at the grill portion 202b is calculated from the following equation:

$$Heat\ capacity\ (grill) = \frac{Heat\ capacity\ (material)}{SF}\quad(4)$$

where *SF* is the shape factor, and where the *Heat capacity (material)* is the heat capacity of the material injected into a mold.

The density at the grill portion 202b is calculated from the following equation:

$$Density\ (grill) = VF * Density(material) \qquad (5)$$

Where *VF* is part volume fraction of the grill portion, and where *Density (material)* is the density of the material injected into the mold.

In some implementations, the part volume fraction and shape factor for square holes is calculated from the following set of equations:

$$PA = (W + Dist) * (W + Dist) \qquad (6)$$

where *PA* is the projected area.

$$VF = 1 - \frac{W*W}{PA} \qquad (7)$$

where *VF* is a part volume fraction.

$$SA\ (through\ hole) = 2 * PA - 2 * W^2 + 4 * W * Depth \qquad (8)$$

$$SA\ (blind\ hole) = 2 * PA + 4 * W * Depth \qquad (9)$$

where *SA (through hole)* is a surface area of a square through-hole, and where *SA (blind hole)* is a surface area of a blind hole, and *Depth* is the depth of the hole.

$$SF = \frac{SA}{2*PA} \qquad (10)$$

where *SF* is a shape factor.

The part volume fraction and shape factor for round holes can be calculated from the following set of equations:

$$PA = (D + Dist) * (D + Dist) \qquad (11)$$

$$VF = 1 - \frac{0.25*\pi*D^2}{PA} \qquad (12)$$

$$SA\ (through\ hole) = 2 * PA - 0.5 * \pi * D^2 + \pi * D * Depth \qquad (13)$$

$$SA\ (blind\ hole) = 2 * PA + \pi * D * Depth \qquad (14)$$

$$SF = \frac{SA}{2*PA} \qquad (15)$$

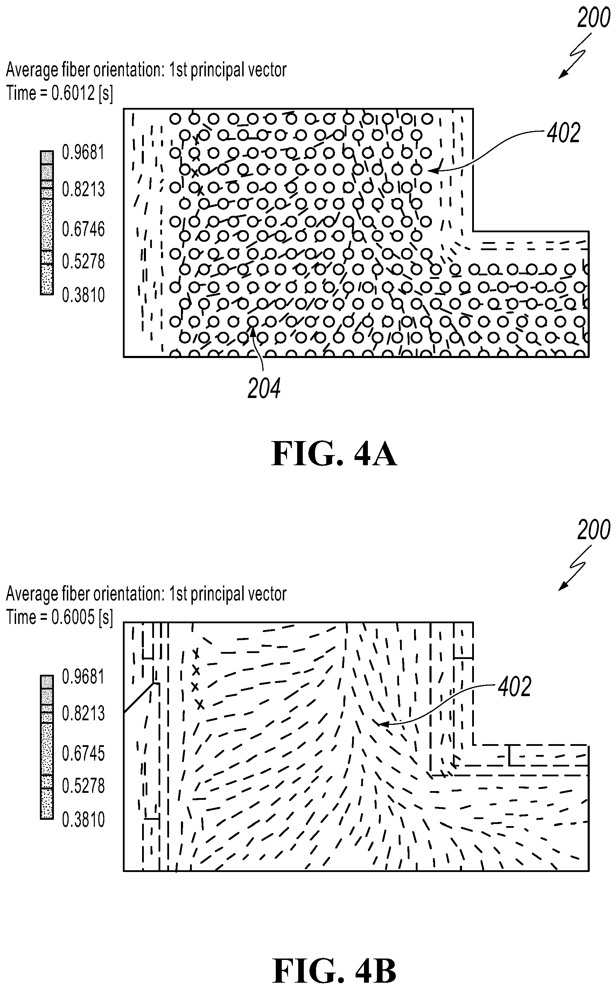

FIG. 4A is a result of a simulation with the example 3D model 200a of the component 200 having a portion with regularly patterned holes 204. FIG. 4B is a result of a simulation with the example 3D model 200b of a component having a portion with regularly patterned holes 204 with the holes 204 removed. More specifically, FIG. 4B is showing the result of simulation using a global model/representation of the first portion to approximate the regularly patterned holes. Alternatively or in addition, at 108c, fiber orientation characteristics of suspended fibers 402 flowing through the first portion 202b are obtained through analytical results and/or empirical fiber orientation data. At109c, a fiber orientation factor is determined based on analytical results or the empirical fiber orientation data. The fiber orientation factor indicates how fibers 402 suspended in the fluid are oriented within the fluid flow. For example, in some implementations, a rotational diffusion model of fiber orientation is used. In such implementations, the fiber orientation is assumed to be in the planar directions of the grill portion. As such, the following equations can be used:

$$GRAF = 1 + HF * (1 - VF) \qquad (16)$$

where *GRAF* is a grill region fiber adjustment factor, and where *HF* is a heuristic factor. In some implementations, the value of the heuristic factor is empirically determined. In some implementations, the heuristic factor is on the order of a few hundred, for example one hundred ninety-nine.

In some implementations, the fiber orientation factor is modified to account for changes in the flow factor and/or the thermal factor. For example, changes in flow regimes can impact a rotation rate of suspended fibers. Alternatively or in addition, fibers can be entrapped in the frozen layer, and further impact the flow regime depending upon the fiber's orientation.

In some implementations, the flow factor is dynamically modified to account for the growth rate of the frozen layer. That is, the flow factor is dependent upon the thickness of the frozen layer, and changes with the thickness of the frozen layer. The frozen layer effect can be included by changing the flow resistance factor. For this, the modified distance between hole values is used in the flow resistance factor calculation:

$$Flow\ Resistance\ Factor = Shear\ Area\ Ratio * \left(\frac{Thickness}{Dist\_modified}\right)^{(1+2n)} \qquad (17)$$

$$Dist_{\_modified} = Dist - HF * FLF * Thickness \qquad (18)$$

where *Dist_modified* is the modified distance between holes, *HF* is a heuristic factor, *FLF* is frozen-layer fraction, and *Thickness* is the local part thickness.

Similarly, the thermal factor can be dependent upon the flow factor as flow regimes have an impact on thermal convection. As such, in some implementations, the operations of determining the flow factor (108a), determining the thermal factor (108b), and/or determining the fiber orientation factor (108c) are coupled to one another. In such implementations, operations 108a, 108b, and 108c are performed simultaneously, concurrently, iteratively, or subsequently with one another in any suitable combination. For example, operations 108a and operations 108b can be performed together while operation 108c is omitted, operations 108a and operations 108c can be performed together while operation 108b is omitted, operations 108b and 108c can be performed together while operation 108a is omitted. Nonetheless, in some implementations, any one of the operations 108a, 108b, or 108c is performed on its own without any of the other operations being performed. While a number of example equations have been provided, such equations are meant only as examples of specific implementations. Other equations for analytical or numerical solving can be used to determine flow factors, thermal factors, and/or fiber orientation factors without departing from this disclosure.

At 110, a numerical simulation of fluid flow through the component is performed using the mesh 208 (FIG. 2B). In some instances, performing the numerical fluid simulation includes modifying a thermal property of the fluid simulation in the first portion based at least in part on the thermal factor. In some implementations, performing the numerical fluid simulation includes modifying a fiber orientation property of the fluid simulation in the first portion based at least in part on the fiber orientation factor. In some implementations, performing the numerical fluid simulation includes modifying a fluid flow property based at least in part on the flow factor. In some implementations, any combination of the aforementioned properties is modified by the flow factor, the thermal factor, and/or the fiber orientation factor.

At 112, results of the simulation are provided. The results of the numerical simulation can be used for a variety of applications, for example, when used to simulate mold injection, the numerical simulation can be used to predict filling pattern, the potential for air-traps at the last point to fill, and the polymer cooling (and freezing) rate. Injection locations, injection rates, and injection temperatures may then be altered (or freshly determined) due to these predicted outcomes, with new injection locations selected which seek to avoid undesirable filling patterns, weld-lines, and air-traps. That is, at 114, one or more components, such as one or more molds, are manufactured based on the results of the simulation. Further, these mold filling simulations can also be the basis of subsequent predictions of the final part shape ("warpage") which rely on the fiber orientation, pressure, and temperature outcomes of the filling simulation to determine the material properties and residual stresses (these are the inputs to the warpage calculation). In some implementations, warpage calculations and/or simulations are also performed using the model 200b without holes.

A digital 3D model (which for brevity will simply be referred to as a model) may, but need not, correspond to a file. The model may be stored in a portion of a file that holds other models (for example, an assembly file), in a single file dedicated to the model in question, or in multiple coordinated files.

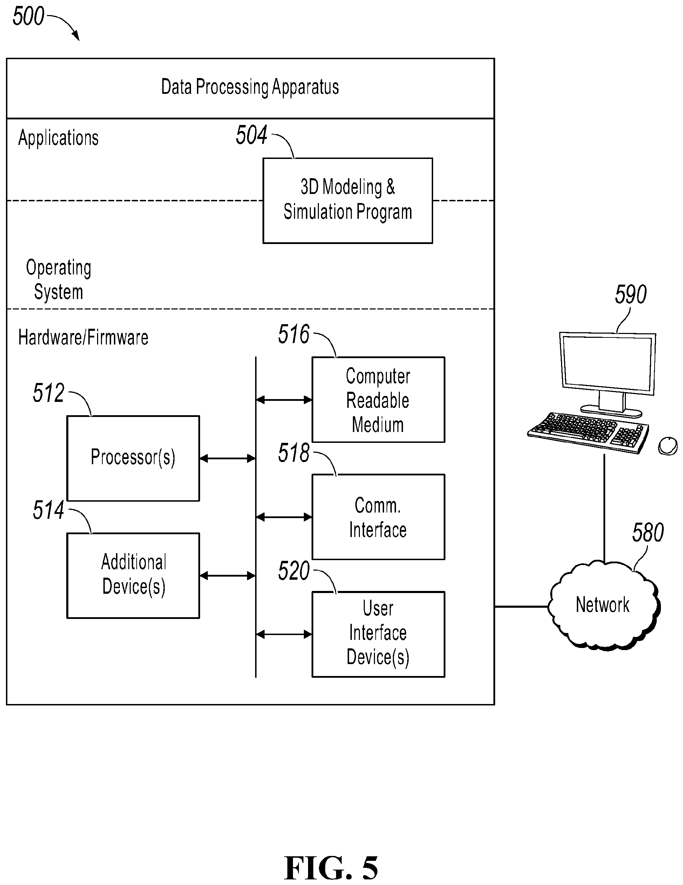

FIG. 5 is a schematic diagram of a data processing system including a data processing apparatus 500, which can be programmed as a client or as a server. The data processing apparatus 500 is connected with one or more computers 590 through a network 580. While only one computer is shown in FIG. 5 as the data processing apparatus 500, multiple computers can be used. The data processing apparatus 500 includes various software modules, which can be distributed between an application layer and an operating system. These can include executable and/or interpretable software programs or libraries, including tools and services of a 3D modeling and simulation program 504, such as described above. The number of software modules used can vary from one implementation to another. Moreover, the software modules can be distributed on one or more data processing apparatus connected by one or more computer networks or other suitable communication networks.

The data processing apparatus 500 also includes hardware or firmware devices including one or more processors 512, one or more additional devices 514, a computer readable medium 516, a communication interface 518, and one or more user interface devices 520. Each processor 512 is capable of processing instructions for execution within the data processing apparatus 500. In some implementations, the processor 512 is a single or multi-threaded processor. Each processor 512 is capable of processing instructions stored on the computer readable medium 516 or on a storage device such as one of the additional devices 514. The data processing apparatus 500 uses its communication interface 518 to communicate with one or more computers 590, for example, over a network 580. Examples of user interface devices 520 include a display, a camera, a speaker, a microphone, a tactile feedback device, a keyboard, and a mouse. The data processing apparatus 500 can store instructions that implement operations associated with the program(s) described above, for example, on the computer readable medium 516 or one or more additional devices 514, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, such as by delivery of the one or more modules of computer program instructions over a wired or wireless network. The computer readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only

**EP 4 296 032 B1**

Memory), EEPROM (Electrically Erasable Programmable Read-Only Memory), and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described is this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this disclosure contains many specific implementation details, these should not be construed as limitations on the scope of what may be claimed, but rather as descriptions of features specific to particular implementations. For example, while primarily described in the context of modeling injection molding, the subject matter described throughout this disclosure is applicable to other simulations, for example Computation Fluid Dynamics modelling of flow through complex lattice-like Additive Manufactured parts (i.e. for CFD of Volumetric Kernel modelled geometries). Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. The invention is defined in the appended claims.

**Claims**

1. A method (100) performed by a data processing apparatus, the method comprising:

   obtaining (102) a digital 3D model of a component to be analyzed, the component including regularly patterned holes;
   identifying (104) a first portion of the model, the first portion of the model corresponding to a first component portion including the regularly patterned holes;
   identifying (106) a second portion of the model, the second portion of the model including parts of the model corresponding to a second component portion lacking the regularly patterned holes;
   determining (109a) a flow factor of the first portion, the flow factor indicating flow characteristics of fluid flowing through the first portion with the regularly patterned holes; and
   performing (110) a numerical fluid simulation, using a mesh representative of the component geometry without the regularly patterned holes, the performing comprising modifying a flow property of the fluid simulation to account for the regularly patterned holes in the first portion based at least in part on the flow factor.

2. The method of claim 1, further comprising determining a thermal factor, the thermal factor indicating thermal characteristics of fluid flowing through the first portion with the regularly patterned holes, the thermal factor including a growth rate of a frozen layer.

3. The method of claim 1, further comprising:
modifying the flow factor dynamically to account for a growth rate of a frozen layer.

4. The method of claim 1, wherein the regularly patterned holes are included in the digital 3D model, the method further comprising:

removing the holes in the 3D model; and
creating the mesh, used to perform the numerical fluid simulation, after removing the holes in the 3D model.

5. The method of claim 1, wherein the regularly patterned holes are omitted from the digital 3D model, the method further comprising:

obtaining (108a) flow characteristics of the first portion of the model corresponding to the first component portion including the regularly patterned holes using analytical flow results or empirical flow data, wherein determining the flow factor is done based on the analytical flow results or the empirical flow data;
obtaining (108b) thermal characteristics of the first portion of the model using analytical thermal results or empirical thermal data;
determining (109b) a thermal factor based on the analytical thermal results or the empirical thermal data;
obtaining (108c) fiber orientation characteristics of the first portion of the model using analytical results or empirical fiber orientation data for fibers suspended in the fluid flow; and
determining (109c) a fiber orientation factor based on the analytical results or the empirical fiber orientation data.

6. The method of claim 1, wherein i) the regularly patterned holes comprise blind holes, wherein determining the flow factor comprises obtaining flow characteristics of the blind holes using analytical results or empirical data, and/or wherein ii) the regularly patterned holes comprise a varied profile hole, wherein the varied profile hole defines a varied cross-sectional shape across a depth of the hole, wherein determining the flow factor comprises obtaining flow characteristics of the varied profile hole using analytical results or empirical data.

7. A system comprising:

one or more processors; and
a computer-readable medium storing instructions executable by the one or more processors to cause the one or more processors to perform operations comprising:

obtaining (102) a digital 3D model of a component to be analyzed, the component including regularly patterned holes;
identifying (104) a first portion of the model, the first portion of the model corresponding to a first component portion including the regularly patterned holes;

identifying (106) a second portion of the model, the second portion of the model including parts of the model corresponding to a second component portion lacking the regularly patterned holes;

determining (109b) a thermal factor of the first portion, the thermal factor indicating a thermal characteristic of fluid flowing through the first portion with the regularly patterned holes, the thermal factor comprising a growth rate of a frozen layer; and
performing (110) a numerical fluid simulation, using a mesh representative of the component geometry without the regularly patterned holes, the performing comprising modifying a thermal property of the numerical fluid simulation to account for the regularly patterned holes in the first portion based at least in part on the thermal factor.

8. The system of claim 7, wherein the numerical fluid simulation is used to determine an injection flow rate or an injection location of an injection mold.

9. The system of claim 7, wherein the regularly patterned holes are omitted from the digital 3D model, wherein the instructions further cause the one or more processor to:

obtain flow characteristics of the first portion of the model corresponding to the first component portion including the regularly patterned holes using analytical flow results or empirical flow data;

determine a flow factor of the first portion, the flow factor indicating flow characteristics of fluid flowing through the first portion with the regularly patterned holes, wherein determination of the flow factor is done based on the analytical flow results or the empirical flow data;

obtain thermal characteristics of the first portion of the model using analytical thermal results or empirical thermal data, wherein determination of the thermal factor is done based on the analytical thermal results or empirical thermal data;

obtain fiber orientation characteristics of the first portion of the model using analytical results or empirical fiber orientation data for fibers suspended in the fluid flow; and

determine a fiber orientation factor based on the analytical results or the empirical fiber orientation data, optionally wherein the instructions further cause the one or more processor to:

modify the flow factor dynamically to account for the growth rate of the frozen layer.

10. The system of claim 9, wherein i) the regularly patterned holes comprise blind holes, wherein the instructions further cause the one or more processor to determine the flow factor by obtaining flow characteristics of the blind holes using analytical results or empirical data, and/ or

wherein ii) the regularly patterned holes comprise a varied profile hole that defines a varied cross-sectional shape across a depth of the hole, wherein the instructions further cause the one or more processor to determine the flow factor by obtaining flow characteristics of the varied profile hole using analytical results or empirical data.

11. A computer-readable medium storing instructions executable by one or more processors to perform operations comprising:

obtaining (102) a digital 3D model of a component to be analyzed, the component including regularly patterned holes;

identifying (104) a first portion of the model, the first portion of the model corresponding to a first component portion including the regularly patterned holes;

identifying (106) a second portion of the model, the second portion of the model including parts of the model corresponding to a second component portion lacking the regularly patterned holes;

determining (109c) a fiber orientation factor, the fiber orientation factor indicating fiber orientation characteristics indicative of fiber orientation properties of fibers suspended within a fluid flowing through the first portion with the regularly patterned holes; and

performing (110) a numerical fluid simulation, using a mesh representative of the component geometry without the regularly patterned holes, the performing comprising modifying a fiber orientation property of the numerical fluid simulation to account for the regularly patterned holes in the first portion based at least in part on the fiber orientation factor.

12. The computer-readable medium of claim 11, wherein the operations further comprise:

determining a flow factor of the first portion, the flow factor indicating flow characteristics of fluid flowing through the first portion with the regularly patterned holes; and

determining a thermal factor of the first portion, the thermal factor indicating thermal characteristic of fluid flowing through the first portion with the regularly patterned holes, the thermal factor comprising a growth rate of a frozen layer,

optionally wherein the operations further comprise modifying the flow factor dynamically to account for the growth rate of the frozen layer.

13. The computer-readable medium of claim 12, wherein i) the regularly patterned holes comprise blind holes, wherein determining the flow factor comprises obtaining flow characteristics of the blind holes using analytical results or empirical data, and/or

wherein ii) the regularly patterned holes comprise a varied profile hole, wherein the varied profile hole defines a varied cross-sectional shape across a depth of the hole, wherein determining the flow factor comprises obtaining flow characteristics of the varied profile hole using analytical results or empirical data.

14. The computer-readable medium of claim 12, wherein the operations further comprise:

determining an injection rate, with iterative calculations using the mesh, based in part on the determined flow factor and the determined thermal factor;

determining an injection temperature, with iterative calculations using the mesh, based in part on the determined flow factor and the determined thermal factor; and

determining an injection location, with iterative calculations using the mesh, based in part on the determined injection rate and injection temperature.

15. The computer-readable medium of any one of claims 11 to 14 or the system of any one of claims 7 to 8, wherein the regularly patterned holes are included in the digital 3D model, and wherein the operations further comprise:

removing the holes in the 3D model; and

creating the mesh after removing the holes in the 3D model.

**Patentansprüche**

1. Verfahren (100), das von einem Datenverarbeitungsapparat durchgeführt wird, wobei das Verfahren umfasst:

Erhalten (102) eines digitalen 3D-Modells einer zu analysierenden Komponente, wobei die Komponente regelmäßig gemusterte Löcher beinhaltet;

Identifizieren (104) eines ersten Teils des Modells, wobei der erste Teil des Modells einem ersten Komponententeil entspricht, der die regelmäßig gemusterten Löcher beinhaltet;

Identifizieren (106) eines zweiten Teils des Modells, wobei der zweite Teil des Modells Teile des Modells beinhaltet, die einem zweiten Komponententeil entsprechen, dem die regelmäßig gemusterten Löcher fehlen;

Bestimmen (109a) eines Strömungsfaktors des ersten Teils, wobei der Strömungsfaktor Strömungseigenschaften eines Fluids anzeigt, das durch den ersten Teil mit den regelmäßig gemusterten Löchern strömt; und

Durchführen (110) einer numerischen Fluid-Simulation unter Verwendung eines Netzes, das für die Komponentengeometrie ohne die regelmäßig gemusterten Löcher repräsentativ ist, wobei das Durchführen das Modifizieren einer Strömungseigenschaft der Fluid-Simulation umfasst, um die regelmäßig gemusterten Löcher in dem ersten Teil wenigstens teilweise basierend auf dem Strömungsfaktor zu berücksichtigen.

2. Verfahren nach Anspruch 1, ferner umfassend das Bestimmen eines thermischen Faktors, wobei der thermische Faktor thermische Eigenschaften eines Fluids anzeigt, das durch den ersten Teil mit den regelmäßig gemusterten Löchern strömt, wobei der thermische Faktor eine Wachstumsrate einer gefrorenen Schicht beinhaltet.

3. Verfahren nach Anspruch 1, ferner umfassend:
dynamisches Modifizieren des Strömungsfaktors, um eine Wachstumsrate einer gefrorenen Schicht zu berücksichtigen.

4. Verfahren nach Anspruch 1, wobei die regelmäßig gemusterten Löcher in dem digitalen 3D-Modell enthalten sind, wobei das Verfahren ferner umfasst:

Entfernen der Löcher im 3D-Modell; und

Erstellen des Netzes, das zur Durchführung der numerischen Fluid-Simulation verwendet wird, nach dem Entfernen der Löcher im 3D-Modell.

5. Verfahren nach Anspruch 1, wobei die regelmäßig gemusterten Löcher aus dem digitalen 3D-Modell weggelassen werden, wobei das Verfahren ferner umfasst:

Erhalten (108a) von Strömungseigenschaften des ersten Teils des Modells, der dem ersten Komponententeil mit den regelmäßig gemusterten Löchern entspricht, unter Verwendung von analytischen Strömungsergebnissen oder empirischen Strömungsdaten, wobei das Bestimmen des Strömungsfaktors basierend auf den analytischen Strömungsergebnissen oder den empirischen Strömungsdaten erfolgt;

Erhalten (108b) von thermischen Eigenschaften des ersten Teils des Modells unter Verwendung von analytischen thermischen Ergebnissen oder empirischen thermischen Daten;

Bestimmen (109b) eines thermischen Faktors basierend auf den analytischen thermischen Ergebnissen oder den empirischen thermischen Daten;

Erhalten (108c) von Faserorientierungseigenschaften des ersten Teils des Modells unter Verwendung von analytischen Ergebnissen oder empirischen Faserorientierungsdaten für in dem Fluidstrom suspendierte Fasern; und

Bestimmen (109c) eines Faserorientierungsfaktors basierend auf den analytischen Ergebnissen oder den empirischen Faserorientierungsdaten.

6. Verfahren nach Anspruch 1, wobei i) die regelmäßig gemusterten Löcher Sacklöcher umfassen, wobei das Bestimmen des Strömungsfaktors das Erhalten von Strömungseigenschaften der Sacklöcher unter Verwendung von analytischen Ergebnissen oder empirischen Daten umfasst, und/oder

wobei ii) die regelmäßig gemusterten Löcher ein Loch mit variiertem Profil umfassen, wobei das Loch mit variiertem Profil eine variierte Querschnittsform über eine Tiefe des Lochs definiert, wobei das Bestimmen des Strömungsfaktors das Erhalten von Strömungseigenschaften des Lochs mit variiertem Profil unter Verwendung von analytischen Ergebnissen oder empirischen Daten umfasst.

7. System, umfassend:

einen oder mehrere Prozessoren; und
ein computerlesbares Medium, das Anweisungen speichert, die von dem einen oder den mehreren Prozessoren ausgeführt werden können, um den einen oder die mehreren Prozessoren zu veranlassen, Operationen durchzuführen, die umfassen:

Erhalten (102) eines digitalen 3D-Modells einer zu analysierenden Komponente, wobei die Komponente regelmäßig gemusterte Löcher beinhaltet;
Identifizieren (104) eines ersten Teils des Modells, wobei der erste Teil des Modells einem ersten Komponententeil entspricht, der die regelmäßig gemusterten Löcher beinhaltet;
Identifizieren (106) eines zweiten Teils des Modells, wobei der zweite Teil des Modells Teile des Modells beinhaltet, die einem zweiten Komponententeil entsprechen, dem die regelmäßig gemusterten Löcher fehlen;
Bestimmen (109b) eines thermischen Faktors des ersten Teils, wobei der thermische Faktor eine thermische Eigenschaft eines Fluids anzeigt, das durch den ersten Teil mit den regelmäßig gemusterten Löchern strömt, wobei der thermische Faktor eine Wachstumsrate einer gefrorenen Schicht umfasst; und
Durchführen (110) einer numerischen Fluid-Simulation unter Verwendung eines Netzes, das für die Komponentengeometrie ohne die regelmäßig gemusterten Löcher repräsentativ ist, wobei das Durchführen das Modifizieren einer thermischen Eigenschaft der numerischen Fluid-Simulation umfasst, um die regelmäßig gemusterten Löcher in dem ersten Teil wenigstens teilweise basierend auf dem thermischen Faktor zu berücksichtigen.

8. System nach Anspruch 7, wobei die numerische Fluid-Simulation verwendet wird, um eine Einspritzdurchflussrate oder einen Einspritzort einer Spritzgussform zu bestimmen.

9. System nach Anspruch 7, wobei die regelmäßig gemusterten Löcher aus dem digitalen 3D-Modell weggelassen werden, wobei die Anweisungen den einen oder die mehreren Prozessoren ferner veranlassen zum:

Erhalten von Strömungseigenschaften des ersten Teils des Modells, der dem ersten Komponententeil mit den regelmäßig gemusterten Löchern entspricht, unter Verwendung von analytischen Strömungsergebnissen oder empirischen Strömungsdaten;
Bestimmen eines Strömungsfaktors des ersten Teils, wobei der Strömungsfaktor Strömungseigenschaften eines Fluids anzeigt, das durch den ersten Teil mit den regelmäßig gemusterten Löchern strömt, wobei die Bestimmung des Strömungsfaktors basierend auf den analytischen Strömungsergebnissen oder den empirischen Strömungsdaten erfolgt;
Erhalten von thermischen Eigenschaften des ersten Teils des Modells unter Verwendung von analytischen thermischen Ergebnissen oder empirischen thermischen Daten, wobei die Bestimmung des thermischen Faktors basierend auf den analytischen thermischen Ergebnissen oder den empirischen thermischen Daten erfolgt;
Erhalten von Faserorientierungseigenschaften des ersten Teils des Modells unter Verwendung von analytischen Ergebnissen oder empirischen Faserorientierungsdaten für in dem Fluidstrom suspendierte Fasern; und
Bestimmen eines Faserorientierungsfaktors basierend auf den analytischen Ergebnissen oder den empirischen Faserorientierungsdaten,
optional wobei die Anweisungen den einen oder die mehreren Prozessoren ferner veranlassen zum:

dynamischen Modifizieren des Strömungsfaktors, um die Wachstumsrate der gefrorenen Schicht zu berücksichtigen.

10. System nach Anspruch 9, wobei i) die regelmäßig gemusterten Löcher Sacklöcher umfassen, wobei die Anweisungen den einen oder die mehreren Prozessoren ferner veranlassen, den Strömungsfaktor durch Erhalten von Strömungseigenschaften der Sacklöcher unter Verwendung von analytischen Ergebnissen oder empirischen Daten zu bestimmen, und/oder

    wobei ii) die regelmäßig gemusterten Löcher ein Loch mit variiertem Profil umfassen, das eine variierte Querschnittsform über eine Tiefe des Lochs definiert, wobei die Anweisungen den einen oder die mehreren Prozessoren ferner veranlassen, den Strömungsfaktor durch Erhalten von Strömungseigenschaften des Lochs mit variiertem Profil unter Verwendung von analytischen Ergebnissen oder empirischen Daten zu bestimmen.

11. Computerlesbares Medium, das Anweisungen speichert, die von einem oder mehreren Prozessoren ausgeführt werden können, um Operationen durchzuführen, die umfassen:

    Erhalten (102) eines digitalen 3D-Modells einer zu analysierenden Komponente, wobei die Komponente regelmäßig gemusterte Löcher beinhaltet;
    Identifizieren (104) eines ersten Teils des Modells, wobei der erste Teil des Modells einem ersten Komponententeil entspricht, der die regelmäßig gemusterten Löcher beinhaltet;
    Identifizieren (106) eines zweiten Teils des Modells, wobei der zweite Teil des Modells Teile des Modells beinhaltet, die einem zweiten Komponententeil entsprechen, dem die regelmäßig gemusterten Löcher fehlen;
    Bestimmen (109c) eines Faserorientierungsfaktors, wobei der Faserorientierungsfaktor Faserorientierungseigenschaften anzeigt, die für Faserorientierungseigenschaften von Fasern indikativ sind, die in einem durch den ersten Teil mit den regelmäßig gemusterten Löchern strömenden Fluid suspendiert sind; und
    Durchführen (110) einer numerischen Fluid-Simulation unter Verwendung eines Netzes, das für die Komponentengeometrie ohne die regelmäßig gemusterten Löcher repräsentativ ist, wobei das Durchführen das Modifizieren einer Faserorientierungseigenschaft der numerischen Fluid-Simulation umfasst, um die regelmäßig gemusterten Löcher in dem ersten Teil wenigstens teilweise basierend auf dem Faserorientierungsfaktor zu berücksichtigen.

12. Computerlesbares Medium nach Anspruch 11, wobei die Operationen ferner umfassen:

    Bestimmen eines Strömungsfaktors des ersten Teils, wobei der Strömungsfaktor Strömungseigenschaften eines Fluids anzeigt, das durch den ersten Teil mit den regelmäßig gemusterten Löchern strömt; und
    Bestimmen eines thermischen Faktors des ersten Teils, wobei der thermische Faktor eine thermische Eigenschaft eines Fluids anzeigt, das durch den ersten Teil mit den regelmäßig gemusterten Löchern strömt, wobei der thermische Faktor eine Wachstumsrate einer gefrorenen Schicht umfasst,
    optional wobei die Operationen ferner das dynamische Modifizieren des Strömungsfaktors umfassen, um die Wachstumsrate der gefrorenen Schicht zu berücksichtigen.

13. Computerlesbares Medium nach Anspruch 12, wobei i) die regelmäßig gemusterten Löcher Sacklöcher umfassen, wobei das Bestimmen des Strömungsfaktors das Erhalten von Strömungseigenschaften der Sacklöcher unter Verwendung von analytischen Ergebnissen oder empirischen Daten umfasst, und/oder

    wobei ii) die regelmäßig gemusterten Löcher ein Loch mit variiertem Profil umfassen, wobei das Loch mit variiertem Profil eine variierte Querschnittsform über eine Tiefe des Lochs definiert, wobei das Bestimmen des Strömungsfaktors das Erhalten von Strömungseigenschaften des Lochs mit variiertem Profil unter Verwendung von analytischen Ergebnissen oder empirischen Daten umfasst.

14. Computerlesbares Medium nach Anspruch 12, wobei die Operationen ferner umfassen:

    Bestimmen einer Einspritzrate, mit iterativen Berechnungen unter Verwendung des Netzes, teilweise basierend auf dem bestimmten Strömungsfaktor und dem bestimmten thermischen Faktor;
    Bestimmen einer Einspritztemperatur, mit iterativen Berechnungen unter Verwendung des Netzes, teilweise basierend auf dem bestimmten Strömungsfaktor und dem bestimmten thermischen Faktor; und
    Bestimmen eines Einspritzorts, mit iterativen Berechnungen unter Verwendung des Netzes, teilweise basierend auf der bestimmten Einspritzrate und Einspritztemperatur.

15. Computerlesbares Medium nach einem der Ansprüche 11 bis 14 oder System nach einem der Ansprüche 7 bis 8, wobei die regelmäßig gemusterten Löcher in dem digitalen 3D-Modell enthalten sind, und wobei die Operationen ferner umfassen:

Entfernen der Löcher im 3D-Modell; und
Erstellen des Netzes nach dem Entfernen der Löcher im 3D-Modell.

## Revendications

1. Procédé (100) mis en œuvre par un appareil de traitement de données, le procédé comprenant :

l'obtention (102) d'un modèle numérique 3D d'un composant à analyser, le composant comportant des trous à motifs réguliers ;
l'identification (104) d'une première partie du modèle, la première partie du modèle correspondant à une première partie de composant comportant les trous à motifs réguliers ;
l'identification (106) d'une seconde partie du modèle, la seconde partie du modèle comportant des parties du modèle correspondant à une seconde partie de composant dépourvue des trous à motifs réguliers ;
la détermination (109a) d'un facteur d'écoulement de la première partie, le facteur d'écoulement indiquant les caractéristiques d'écoulement de fluide s'écoulant à travers la première partie avec les trous à motifs réguliers ; et
la mise en œuvre (110) d'une simulation numérique de fluide, en utilisant un maillage représentatif de la géométrie de composant sans les trous à motifs réguliers, la mise en œuvre comprenant la modification d'une propriété d'écoulement de la simulation de fluide pour tenir compte des trous à motifs réguliers dans la première partie sur la base au moins en partie du facteur d'écoulement.

2. Procédé selon la revendication 1, comprenant également la détermination d'un facteur thermique, le facteur thermique indiquant les caractéristiques thermiques du fluide s'écoulant à travers la première partie avec les trous à motifs réguliers, le facteur thermique comportant un taux de croissance d'une couche gelée.

3. Procédé selon la revendication 1, comprenant également :
la modification du facteur d'écoulement de manière dynamique pour tenir compte d'un taux de croissance d'une couche gelée.

4. Procédé selon la revendication 1, dans lequel les trous à motifs réguliers sont inclus dans le modèle numérique 3D, le procédé comprenant également :

la suppression des trous dans le modèle 3D ; et
la création du maillage, utilisé pour mettre en œuvre la simulation numérique de fluide, après avoir supprimé les trous dans le modèle 3D.

5. Procédé selon la revendication 1, dans lequel les trous à motifs réguliers sont inclus dans le modèle numérique 3D, le procédé comprenant également :

l'obtention (108a) de caractéristiques d'écoulement de la première partie du modèle correspondant à la première partie de composant comportant les trous à motifs réguliers en utilisant des résultats d'écoulement analytiques ou des données d'écoulement empiriques, dans lequel la détermination du facteur d'écoulement est effectuée sur la base des résultats d'écoulement analytiques ou des données d'écoulement empiriques ;
l'obtention (108b) de caractéristiques thermiques de la première partie du modèle en utilisant des résultats thermiques analytiques ou des données thermiques empiriques ;
la détermination (109b) d'un facteur thermique sur la base des résultats thermiques analytiques ou des données thermiques empiriques ;
l'obtention (108c) de caractéristiques d'orientation de fibres de la première partie du modèle en utilisant des résultats analytiques ou des données d'orientation de fibres empiriques pour les fibres en suspension dans l'écoulement de fluide ; et
la détermination (109c) d'un facteur d'orientation de fibres sur la base des résultats analytiques ou des données d'orientation de fibres empiriques.

6. Procédé selon la revendication 1, dans lequel i) les trous à motifs réguliers comprennent des trous borgnes, dans lequel la détermination du facteur d'écoulement comprend l'obtention de caractéristiques d'écoulement des trous borgnes en utilisant des résultats analytiques ou des données empiriques, et/ou

dans lequel ii) les trous à motifs réguliers comprennent un trou à profil varié, dans lequel le trou à profil varié définit une forme de section transversale variée sur une profondeur du trou, dans lequel la détermination du facteur d'écoulement comprend l'obtention de caractéristiques d'écoulement du trou à profil varié en utilisant des résultats analytiques ou des données empiriques.

7.  Système comprenant :

    un ou plusieurs processeurs ; et
    un support lisible par ordinateur stockant des instructions exécutables par les un ou plusieurs processeurs afin d'amener les un ou plusieurs processeurs à mettre en œuvre des opérations comprenant :

        l'obtention (102) d'un modèle numérique 3D d'un composant à analyser, le composant comportant des trous à motifs réguliers ;
        l'identification (104) d'une première partie du modèle, la première partie du modèle correspondant à une première partie de composant comportant les trous à motifs réguliers ;
        l'identification (106) d'une seconde partie du modèle, la seconde partie du modèle comportant des parties du modèle correspondant à une seconde partie de composant dépourvue des trous à motifs réguliers ;
        la détermination (109b) d'un facteur thermique de la première partie, le facteur thermique indiquant une caractéristique thermique de fluide s'écoulant à travers la première partie avec les trous à motifs réguliers, le facteur thermique comprenant un taux de croissance d'une couche gelée ; et
        la mise en œuvre (110) d'une simulation numérique de fluide, en utilisant un maillage représentatif de la géométrie de composant sans les trous à motifs réguliers, la mise en œuvre comprenant la modification d'une propriété thermique de la simulation numérique de fluide pour tenir compte des trous à motifs réguliers dans la première partie sur la base au moins en partie du facteur thermique.

8.  Système selon la revendication 7, dans lequel la simulation numérique de fluide est utilisée pour déterminer un débit d'écoulement d'injection ou un emplacement d'injection d'un moule d'injection.

9.  Système selon la revendication 7, dans lequel les trous à motifs réguliers sont omis du modèle 3D numérique, dans lequel les instructions amènent également les un ou plusieurs processeurs à :

    obtenir des caractéristiques d'écoulement de la première partie du modèle correspondant à la première partie de composant comportant les trous à motifs réguliers en utilisant des résultats d'écoulement analytiques ou des données d'écoulement empiriques ;
    déterminer un facteur d'écoulement de la première partie, le facteur d'écoulement indiquant les caractéristiques d'écoulement de fluide s'écoulant à travers la première partie avec les trous à motifs réguliers, dans lequel la détermination du facteur de fluide est effectuée sur la base des résultats d'écoulement analytiques ou des données d'écoulement empiriques ;
    obtenir des caractéristiques thermiques de la première partie du modèle en utilisant des résultats thermiques analytiques ou des données thermiques empiriques, dans lequel la détermination du facteur thermique est effectuée sur la base des résultats thermiques analytiques ou des données thermiques empiriques ;
    obtenir des caractéristiques d'orientation de fibres de la première partie du modèle en utilisant des résultats analytiques ou des données d'orientation de fibres empiriques pour les fibres en suspension dans l'écoulement de fluide ; et
    déterminer un facteur d'orientation de fibres sur la base des résultats analytiques ou des données d'orientation de fibres empiriques,
    éventuellement dans lequel les instructions amènent également les un ou plusieurs processeurs à :
    modifier le facteur d'écoulement de manière dynamique pour tenir compte du taux de croissance de la couche gelée.

10. Système selon la revendication 9, dans lequel i) les trous à motifs réguliers comprennent des trous borgnes, dans lequel les instructions amènent également les un ou plusieurs processeurs à déterminer le facteur d'écoulement en obtenant des caractéristiques d'écoulement des trous borgnes en utilisant des résultats analytiques ou des données empiriques, et/ou

    dans lequel ii) les trous à motifs réguliers comprennent un trou à profil varié qui définit une forme de section transversale variée sur une profondeur du trou, dans lequel les instructions amènent également les un ou plusieurs processeurs à déterminer le facteur d'écoulement pour obtenir des caractéristiques d'écoulement du trou à profil varié en utilisant des résultats analytiques ou des données empiriques.

11. Support lisible par ordinateur stockant des instructions exécutables par un ou plusieurs processeurs pour mettre en œuvre des opérations comprenant :

l'obtention (102) d'un modèle numérique 3D d'un composant à analyser, le composant comportant des trous à motifs réguliers ;
l'identification (104) d'une première partie du modèle, la première partie du modèle correspondant à une première partie de composant comportant les trous à motifs réguliers ;
l'identification (106) d'une seconde partie du modèle, la seconde partie du modèle comportant des parties du modèle correspondant à une seconde partie de composant dépourvue des trous à motifs réguliers ;
la détermination (109c) d'un facteur d'orientation de fibres, le facteur d'orientation de fibres indiquant des caractéristiques d'orientation de fibres indicatives des propriétés d'orientation de fibres en suspension dans un fluide s'écoulant à travers la première partie avec les trous à motifs réguliers ; et
la mise en œuvre (110) d'une simulation numérique de fluide, en utilisant un maillage représentatif de la géométrie de composant sans les trous à motifs réguliers, la mise en œuvre comprenant la modification d'une propriété d'orientation de fibres de la simulation numérique de fluide pour tenir compte des trous à motifs réguliers dans la première partie sur la base au moins en partie du facteur d'orientation de fibres.

12. Support lisible par ordinateur selon la revendication 11, dans lequel les opérations comprennent également :

la détermination d'un facteur d'écoulement de la première partie, le facteur d'écoulement indiquant des caractéristiques d'écoulement de fluide s'écoulant à travers la première partie avec les trous à motifs réguliers ; et
la détermination d'un facteur thermique de la première partie, le facteur thermique indiquant une caractéristique thermique de fluide s'écoulant à travers la première partie avec les trous à motifs réguliers, le facteur thermique comprenant un taux de croissance d'une couche gelée,
éventuellement dans lequel les opérations comprennent également la modification du facteur d'écoulement de manière dynamique pour tenir compte du taux de croissance de la couche gelée.

13. Support lisible par ordinateur selon la revendication 12, dans lequel i) les trous à motifs réguliers comprennent des trous borgnes, dans lequel la détermination du facteur d'écoulement comprend l'obtention de caractéristiques d'écoulement des trous borgnes en utilisant des résultats analytiques ou des données empiriques, et/ou
dans lequel ii) les trous à motifs réguliers comprennent un trou à profil varié, dans lequel le trou à profil varié définit une forme de section transversale variée sur une profondeur du trou, dans lequel la détermination du facteur d'écoulement comprend l'obtention de caractéristiques d'écoulement du trou à profil varié en utilisant des résultats analytiques ou des données empiriques.

14. Support lisible par ordinateur selon la revendication 12, dans lequel les opérations comprennent également :

la détermination d'un débit d'injection, avec des calculs itératifs utilisant le maillage, sur la base en partie du facteur de débit déterminé et du facteur thermique déterminé ;
la détermination d'une température d'injection, avec des calculs itératifs en utilisant le maillage, sur la base en partie du facteur d'écoulement déterminé et du facteur thermique déterminé ; et
la détermination d'un emplacement d'injection, avec des calculs itératifs en utilisant le maillage, sur la base en partie du débit d'injection déterminé et de la température d'injection.

15. Support lisible par ordinateur selon l'une quelconque des revendications 11 à 14 ou système selon l'une quelconque des revendications 7 et 8, dans lequel les trous à motifs réguliers sont inclus dans le modèle 3D numérique, et dans lequel les opérations comprennent également :

la suppression des trous dans le modèle 3D ; et
la création du maillage après avoir supprimé les trous dans le modèle 3D.

*100*

Obtain a 3D Model of a component to be Analyzed — 102

Identify a first portion of the model — 104

Identify a second portion of the model — 106

Removing holes in the 3D model — 107a

Creating a mesh — 107b

A

**FIG. 1**

FIG. 1 (continued)

**FIG. 2**

**FIG. 2A**

**FIG. 2B**

EP 4 296 032 B1

**FIG. 3B**

Fill time
= 0.0982[s]

[s]
0.1024
0.0768
0.0512
0.0256
0.0000

206
202b
300b

**FIG. 3A**

Fill time
= 0.0982[s]

[s]
0.1025
0.0769
0.0512
0.0256
0.0000

206
204
202a
300a

21

Average fiber orientation: 1st principal vector
Time = 0.6012 [s]

0.9681
0.8213
0.6746
0.5278
0.3810

402

204

**FIG. 4A**

200

Average fiber orientation: 1st principal vector
Time = 0.6005 [s]

0.9681
0.8213
0.6745
0.5278
0.3810

402

200

**FIG. 4B**

500

Data Processing Apparatus

Applications

504

3D Modeling &
Simulation Program

Operating
System

Hardware/Firmware

516

Computer
Readable
Medium

512

Processor(s)

518

Comm.
Interface

514

Additional
Device(s)

520

User
Interface
Device(s)

590

580

Network

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022004682 A

**Non-patent literature cited in the description**

- **J. LIU et al.** *Advances in Engineering Software*, 2015, vol. 87, 13-29